# EUROPEAN PATENT APPLICATION

(11) **EP 4 167 531 A1**
(43) Date of publication of application: **19.04.2023**
(21) Application number: 21202953.2
(22) Date of filing: 15.10.2021
(51) Int. Cl.: H04L 12/28

(54) **COMMISSIONING OF A COMMON SYSTEM OF ELECTRONIC DEVICES**

(71) Applicant: BrainLit AB, 223 63 Lund (SE)
(72) Inventor: Löwgren, Truls, 216 19 Malmö (SE); Wingren, Tord, 222 36 Lund (SE); Lindoff, Bengt, 237 35 Bjärred (SE); Singvall, Jacob, 237 34 Bjärred (SE); Roselius, Frans, 268 31 Svalöv (SE)
(74) Representative: AWA Sweden AB

(57) **Abstract**

A method for determining a position of each of a plurality of electronic devices (100) belonging to a common system of electronic devices is disclosed. The method comprising, for each of the plurality of electronic devices (100): detecting (S302) presence of a person in a predetermined presence volume associated with the electronic device (100); in response to detecting presence of a person in the predetermined presence volume, wirelessly transmitting (S304), from the electronic device (100), an ID-message comprising a device-ID of the electronic device (100); at a portable electronic device (200), receiving (S306) the ID-message and extracting the device-ID of the electronic device (100); and mapping (S308) a current position of the portable electronic device (200) as a position of the electronic device (100) for which device-ID has been extracted.

## Description

### Technical field

The present disclosure relates to commissioning of a common system of electronic devices. Especially, determination of a position of each of a plurality of electronic devices belonging to the common system of electronic devices.

### Background of the invention

Commissioning of electronic devices in a common system of electronic devices in buildings, such as office spaces etc., using prior art methods are complex tasks. In the prior art there is typically a need of a plurality of manual tasks to be performed. During the commissioning an identity of each electronic device is manually controlled. Further, a position within the building for each electronic device is manually determined and mapped to the identity of the respective electronic device. All this makes the procedure to commission the common system of electronic devices in buildings time consuming and technically complex and hence comes with a significant cost.

An example of a common system of electronic devices is a lighting system comprising electronic devices in the form of luminaries. For some application it is important to know where in the building and even where in a room each luminary of the lighting system is positioned. This in order to be able to control the luminaries so that specific lighting scenes may be set. This is especially the case for a biocentric lightning system where light emitted by the luminaries can be adjusted for optimized well-being for individual users.

In such a common system of electronic devices there would be a significant advantage if the commissioning of the system can be done in a less complex and more automatic way. Hence, there is a need for improving the commissioning of common systems of electronic devices in buildings.

### Summary of the invention

It is an object to, at least partly, mitigate, alleviate, or eliminate one or more of the above-identified deficiencies in the art and disadvantages singly or in any combination and solve at least the above-mentioned problem.

According to a first aspect an electronic device configured to be fixedly mounted in a space is provided. The electronic device comprising: a presence sensor configured to detect presence of a person in a predetermined presence volume; an ID-transmitter configured to wirelessly transmit an ID-message comprising a device-ID of the electronic device, the ID-transmitter further being configured to be in a normally-off mode or in an active mode; and control circuitry configured to, in response to the presence sensor detecting presence of a person in the predetermined presence volume, set the ID-transmitter in the active mode such that the ID-transmitter transmits the ID-message.

An electronic device of the first aspect facilitates commissioning of a common system of a plurality of such electronic devices. This due to that it is made possible for each of the electronic devices to wirelessly announce its device-ID upon presence of a person within a predetermined presence volume associated with the electronic device is detected. Hence, this allows for making an association between the device-ID and a current position of the person. The current position of the person may be monitored by a portable electronic device discussed below in connection with the second, third and fourth aspects. The commissioning of a common system of a plurality such electronic devices provided by the electronic device of the first aspect can be made faster and less complex as compared with the prior art. Further, using presence sensors for triggering the device-ID transmission improves the commissioning reliability since this makes it possible to arrange so that only one electronic device transmits its device-ID at a time.

The ID-transmitter may, upon being set in the active mode, be configured to transmit the ID-message a plurality of times until it returns to the normally-off mode. This facilitates for the receiver of the ID-message to receive the message. This further reduces the probability to miss the ID-message, improving reliability of the commissioning.

The ID-transmitter may be in the normally-off mode unless the presence sensor is detecting presence of a person in the predetermined presence volume. This facilitate that only one electronic device is transmitting its ID-message at a time. Further, power may be saved by having the ID-transmitter normally-off.

The presence sensor may be set to have a field-of-view covering a solid angle of 0.10 to 1.0 steradian, preferably 0.10 to 0.8 steradian, most preferably 0.10 to 0.5 steradian. This facilitate having non-overlapping predetermined presence volumes for the different electronic devices in the common system of electronic devices. By this an increase in reliability of the commissioning is provided.

The ID-transmitter may be configured to transmit the ID-message via light signaling or radio communication.

The presence sensor may be configured be in a normally-off mode or in an active mode, wherein the presence sensor is configured to be set in the active mode in response to a configuration commissioning message from a remote device. Power may be saved by having the presence sensor normally-off. Moreover, a reduced risk for occasionally errors in ID updates when not in commissioning mode is provided.

According to a second aspect a non-transitory computer-readable recording medium is provided. The non-transitory computer-readable recording medium having recorded thereon a program which is executable on a portable electronic device having processing capabilities. The program comprises program code portions which when executed on the portable electronic device is configured to: extract a device-ID pertaining to an electronic device from an ID-message wirelessly received by the portable electronic device; and associate a current position of the portable electronic device with the extracted the device-ID.

Using a program which is executable on a portable electronic device that is configured to wirelessly receive the device-ID removes the need for reading an ID-number or the like written on the electronic device. Further, associating the device-ID with the current position of the portable electronic device simplifies the commissioning procedure.

The program may further comprise program code portions which when executed on the portable electronic device is configured to map the current position of the portable electronic device as a position of the electronic device for which the device-ID has been extracted.

The above-mentioned features of the first aspect, when applicable, apply to this second aspect as well. In order to avoid undue repetition, reference is made to the above.

According to a third aspect a method for determining a position of each of a plurality of electronic devices belonging to a common system of electronic devices is provided. The method comprising, for each of the plurality of electronic devices: detecting presence of a person in a predetermined presence volume associated with the electronic device; in response to detecting presence of a person in the predetermined presence volume, wirelessly transmitting, from the electronic device, an ID-message comprising a device-ID of the electronic device; at a portable electronic device, receiving the ID-message and extracting the device-ID of the electronic device; and mapping a current position of the portable electronic device as a position of the electronic device for which device-ID has been extracted.

The step of mapping may comprise allocating the device-ID to an electronic device in a preexisting map of the common system of electronic devices by comparing the current position of the portable electronic device with positions of the electronic devices in the preexisting map.

The method may further comprise setting the common system of electronic devices in a commissioning mode wherein a respective presence sensor in each of the electronic devices in the common system of electronic devices is set in an active mode such that presence of a person in a predetermined presence volume related to the respective electronic device is detectable.

The above-mentioned features of the first or second aspects, when applicable, apply to this third aspect as well. In order to avoid undue repetition, reference is made to the above.

According to a fourth aspect a system comprising a plurality of electronic devices according to the first aspect is provided. The plurality of electronic devices belongs to a common system of electronic devices. The common system of electronic devices may be a lighting system. The electronic devices may be luminaries of the lighting system.

The system may further comprise a portable electronic device comprising a non-transitory computer-readable recording medium according to the second aspect.

The system may further comprise a central control engine configured to store a database comprising a respective position of each of the plurality of electronic devices and a device-ID associated with the respective electronic device.

The central control engine may further be configured to: receive information associating a position with a device-ID; and map the received position as a position of the electronic device which the device-ID.

The central control engine may further configured to: receive information associating a position with a device-ID; and allocate the device-ID to an electronic device in a preexisting map of a common system of electronic devices by comparing the received position with positions of the electronic devices in the preexisting map.

The above-mentioned features of the first, second or third aspects, when applicable, apply to this fourth aspect as well. In order to avoid undue repetition, reference is made to the above.

A further scope of applicability will become apparent from the detailed description given below. However, it should be understood that the detailed description and specific examples are given by way of illustration only.

It is to be understood that the terminology used herein is for purpose of describing particular embodiments only, and is not intended to be limiting. It must be noted that, as used in the specification and the appended claims, the articles "a," "an," "the," and "said" are intended to mean that there are one or more of the elements unless the context clearly dictates otherwise. Thus, for example, reference to "a unit" or "the unit" may include several units, and the like. Furthermore, the words "comprising", "including", "containing" and similar wordings does not exclude other elements or steps.

### Brief description of the drawings

The above and other aspects will now be described in more detail, with reference to appended figures. The figures should not be considered limiting; instead they are used for explaining and understanding.

As illustrated in the figures, the sizes of layers and regions may be exaggerated for illustrative purposes and, thus, are provided to illustrate the general structures. Like reference numerals refer to like elements throughout.
Fig. 1 illustrates a lighting system arranged in a building.
Fig. 2 is a block diagram of a method for determining a position of each of a plurality of electronic devices belonging to a common system of electronic devices.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and to fully convey the scope of the invention to the skilled person.

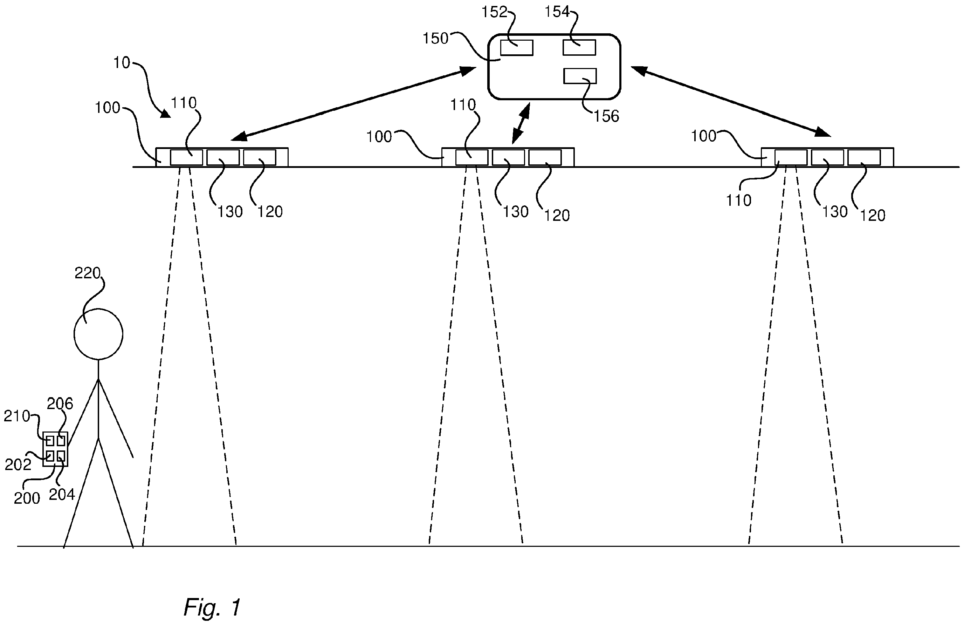

In connection with Fig 1. a system 10 comprising a plurality of electronic devices 100 will be discussed. The plurality of electronic devices 100 are interconnected into a common system of electronic devices. The electronic devices 100 belongs to a common system of electronic devices since they either report to and/or get instructions to a central control engine 150. The electronic devices 100 are typically configured to be fixedly mounted in a space, e.g. in a room of a building. The electronic devices 100 of the common system 10 of electronic devices are luminaries in a lighting system but it may also be other electronic devices associated to the lighting system, such as button or dimmers etc.. The central control engine 150 being configured to control the luminaries so that a specific lighting scene may be set. Setting of such lighting scenes is especially important in the case for a biocentric lightning system where light emitted by the luminaries is to be adjusted for optimized well-being for individual users. Upon setting of a light scene, it is important to know a position of the respective electronic device 100, i.e. luminary. The present disclosure is directed towards simple and efficient determination of determining a position of each electronic device 100, such as a luminary, in the common system of electronic devices, i.e. the lighting system.

The basic concept of the present disclosure is mapping of specific electronic devices 100, e.g. luminaries, to a specific position. Especially, performing such mapping in an efficient and automized manner with a high degree of accuracy. This is realized by that each electronic device 100 comprises a presence sensor 110 and an ID-transmitter 120.

The presence sensor 110 may e.g. be embodied as a radar sensor, a camera or a PIR-sensor. The presence sensor 110 is configured to detect presence of a person in a predetermined presence volume. The predetermined presence volume being unique for each electronic device 100. The predetermined presence volume may be located opposite/beneath the specific electronic device 100. This is especially beneficial in case of the electronic device 100 being arranging in a celling of a building. The predetermined presence volume associated with a specific electronic device 100 may comprise a predetermined presence area defined on a floor opposite/beneath the specific electronic device 100. A size of the predetermined presence area may be 0.5 to 1.5 square meters. The presence sensor 110 may be set to have a field-of-view covering a solid angle of 0.10 to 1.0 steradian, preferably 0.10 to 0.8 steradian, most preferably 0.10 to 0.5 steradian. Having such focused field-of-view facilitate avoidance of overlapping predetermined presence volumes for different presence sensors 110 belonging to different electronic devices 100. Hence, facilitating that only presences in connection with the specific electronic device 100 is monitored. The presence sensor 110 may be configured be in a normally-off mode. By the presence sensor 110 being configured to be in a normally-off mode is meant that unless a configuration commissioning message for activating the presence sensor 110 is received by the electronic device 100 the presence sensor 110 is off. Such configuration commissioning message is communicated to the electronic device 100 from a device remote from the electronic device 100, for example from the central control engine 150. Upon receipt of such a configuration commissioning message the presence sensor 110 is set in an active mode. The active mode may last for a predetermined period of time that may for instance be 10ths of minutes to an hour or a day. In another embodiment, the active mode may last until a new configuration message instructing the electronic device 100 to deactivate the presence sensor 110 is received. Such new configuration message may also be transmitted by the central control engine 150.

The ID-transmitter 120 is configured to wirelessly transmit an ID-message comprising a device-ID of the electronic device 100. The device-ID is preferably unique for the electronic device. The device-ID may be a light system specific address. For instance, if the lighting system is using the Digital Addressable Lighting Interface (DALI) protocol the device ID may be the Dali Long address, a length 24-bit string. In some embodiment a short address (0-63, 6 bits) may be used. In yet other lighting systems, the light sources may use an MAC address, for instance the MAC address associated to (one of) the communication module associated to the light source.

The ID-transmitter 120 is configured to be in a normally-off mode or in an active mode. By the ID-transmitter 120 being configured to be in the normally-off mode is meant that unless the ID-transmitter 120 is instructed to be set in the active mode the ID-transmitter 120 is off. In the active mode the ID-transmitter 120 is configured to transmit the ID-message. The ID-transmitter 120 may be configured to transmit the ID-message via light signaling, radio communication or any other type of wireless signaling method. Upon being set in the active mode the ID-transmitter 120 may be configured to transmit the ID-message a plurality of times until it returns to the normally-off mode.

Each electronic device 100 further comprises a control circuitry 130. The control circuitry 130 may be hardware or software implemented. The control circuitry 130 may even be a combination of hardware and software portions. The software may be executed by a processor being part of the control circuitry. In case of being full or partly software implemented the control circuitry 130 may comprise a memory storing software code portions. The control circuitry 130 is configured to, in response to the presence sensor 110 detecting presence of a person in the predetermined presence volume, set the ID-transmitter 120 in the active mode. The ID-transmitter 120 is preferably in the normally-off mode unless the control circuitry 130 is instructing the ID-transmitter 120 to be set in the active mode. Hence, the ID-transmitter 120 is preferably in the normally-off mode unless the presence sensor 110 is detecting presence of a person in the predetermined presence volume.

The system further comprises a non-transitory computer-readable recording medium 210. The non-transitory computer-readable recording medium 210 having recorded thereon a program which is executable on a portable electronic device 200 having processing capabilities. The program may e.g. be in the form of an application downloadable to the portable electronic device 200. The portable electronic device 200 may e.g. be a smartphone, a laptop, a tablet, etc. The portable electronic device 200 is configured to be carried by a person 220 moving around in a space wherein the electronic devices 100 are arranged.

The portable electronic device 200 comprising a positioning module 202. The positioning module 202 being configured to determine a current position of the portable electronic device 200. Such a positioning module 202 is well known to the skilled person and will not be discussed in more detail in this disclosure. Non-limiting examples are GPS sensors, or position sensors using Bluetooth/WiFi/cellular radio signals.

The portable electronic device 200 comprising a receiver 204 configured to receive ID-messages transmitted from ID-transmitters 120 of the electronic devices. Hence, the receiver 204 is configured to receive wireless signals such as light signaling, radio communication or any other type of wireless signaling. Such a receiver 204 is well known to the skilled person and will not be discussed in more detail in this disclosure. Non-limiting examples are receivers based on Bluetooth^{®}, LiFi, or WiFi.

The portable electronic device 200 comprising a processor configured to execute the program stored on the non-transitory computer-readable recording medium 210. The program recorded on the non-transitory computer-readable recording medium 210 comprises program code portions which when executed on the portable electronic device 200 is configured to extract a device-ID pertaining to an electronic device 100 from an ID-message wirelessly received by the portable electronic device 200.

The program recorded on the non-transitory computer-readable recording medium 210 further comprises program code portions which when executed on the portable electronic device 200 is configured to associate a current position of the portable electronic device 200 which the extracted device-ID. Such associated information may be transmitted from the portable electronic device 200 to the central control engine 150. The portable electronic device 200 comprises a transmitter 206 configured to transmit information to the central control engine 150. Typically, the transmitter 206 and the central control engine 150 are configured to communicate wirelessly, e.g. via WiFi, or using any kind of mobile communication standard (e.g. 3G, 4G or 5G). Such a transmitter 206 is well known to the skilled person and will not be discussed in more detail in this disclosure.

The program may further comprise program code portions which when executed on the portable electronic device 200 is configured to map the current position of the portable electronic device 200 as a position of the electronic device 100 for which the device-ID has been extracted. Such mapped information may then be communicated to the central control engine 150. Further, to map a current position of the portable electronic device 200 as a position of the electronic device 100 for which the device-ID has been extracted may comprise to allocate the device-ID to an electronic device 100 in a preexisting map of a common system of electronic devices by comparing the current position of the portable electronic device 200 with positions of the electronic devices in the preexisting map. To allocate the device-ID to an electronic device 100 in the preexisting map of a common system of electronic devices may comprise to allocate the electronic device in the preexisting map being closest to the current position of the portable electronic device 200 with the device-ID. The preexisting map of the common system of electronic devices comprises position information of the electronic devices common system of electronic devices. However, the preexisting map does not necessarily comprise a device-ID for the electronic devices common system of electronic devices, at least not before the commissioning discussed in this disclosure has been performed.

The central control engine 150 is configured to store, and possibly also update, a database 152 comprising information pertaining to at which position the specific electronic devices 100 in the common system of electronic devices 100 are located. Hence, the database 152 comprises a respective position of each of the plurality of electronic devices 100 and a device-ID associated with the respective electronic device 100.

The central control engine 150 may further be configured to receive information associating a position with a device-ID of an electronic device 100. The central control engine 150 may further be configured to map the received position as a position of the electronic device 100 which the device-ID. The received information associating a position with a device-ID of an electronic device 100 may e.g. corresponds to the associated information of a current position of the portable electronic device 200 and the extracted device-ID being transmitted from the portable electronic device 200.

Alternatively, or in combination, the central control engine 150 may be configured to allocate the received device-ID to an electronic device 100 in a preexisting map of a common system of electronic devices by comparing the received position associated with the device-ID with positions of electronic devices in the preexisting map. The allocation the received device-ID to an electronic device in a preexisting map may comprises to associate an electronic device in the preexisting map being closest to the received position with the device-ID.

The central control engine 150 may further be configured to set the common system of electronic devices in a commissioning mode. In order to set the common system of electronic devices in a commissioning mode the central control engine 150 is configured to transmit a configuration commissioning message to the plurality of electronic devices 100. The commissioning message may e.g. be broadcasted to the plurality of electronic devices 100. The commissioning message comprising information instructing the presence sensor 110 to be activated. The commissioning message may further comprise information about how to transmit the ID-message, e.g. type of wireless communication method, frequency band to use, protocol to use etc. In the commissioning mode, a respective presence sensor 110 in each of the electronic devices 100 in the common system of electronic devices is set in an active mode. Hence, detection of presence of a person in a predetermined presence volume related to the respective electronic device is made possible. Upon the common system of electronic devices is not in the commissioning mode, the respective presence sensor 110 in each of the electronic devices 100 in the common system of electronic devices is typically off.

The central control engine 150 may comprise a processor 154 configured to execute a program stored on a non-transitory computer-readable recording medium 156. The program comprising program code portions, which upon being executed on the processor of the central control engine 150, are configured to perform one or more of the functionalities of the central control engine 150 discussed in this disclosure. Further, one or more of the functionalities of the central control engine 150 discussed in this disclosure may alternatively be executed by circuitry being configured to person such functionality.

Below determination of the positions of each of the plurality of electronic devices 100 in the system disclosed in connection with Fig. 1 will be discussed. Hence, commissioning of the system 10 will be discussed.

Upon a person 220, especially a person 220 carrying the portable electronic device 200, enters a first predetermined presence volume of a first presence sensor 110 belonging to a first electronic device 100, a first ID-transmitter 120 of the first electronic device 100 is activated. Upon being activated the first ID-transmitter 120 wirelessly transmit an ID-message comprising a device-ID of the first electronic device 100. The device-ID of the first electronic device 100 is extracted at the portable electronic device 200. The device-ID of the first electronic device 100 is then associated or mapped to the current position of the portable electronic device 200. The associated or mapped information may then be transmitted to the central control engine 150 so that it can processed and stored in the database 152.

Further, upon the person 220 leaves the first predetermined presence volume, the first presence sensor 110 of the first electronic device 100 does not detect a presence of a person. In such case the first ID-transmitter 120 is deactivated. Hence, no ID-message is transmitted from the first electronic device 100. Upon moving forward, the person 220 carrying the portable electronic device 200, enters a second predetermined presence volume of a second presence sensor 110 belonging to a second electronic device 100. Upon presence of the person 220 in the second predetermined presence volume a second ID-transmitter 120 of the second electronic device 100 is activated. Upon being activated the second ID-transmitter 120 wirelessly transmit an ID-message comprising a device-ID of the second electronic device 100. The device-ID of the second electronic device 100 is extracted at the portable electronic device 200. The device-ID of the second electronic device 100 is then associated or mapped to the current position of the portable electronic device 200. The associated or mapped information may then be transmitted to the central control engine 150 so that it can processed and stored in the database 152. The above process may continue as long as the common system of electronic devices is set in the commissioning mode.

The commissioning of the common system of electronic devices may be performed over a relatively long consecutive time period (days, weeks or months). Alternatively, the commissioning of the common system may be activated for shorter time periods (minutes or hours) multiple times. This facilities for an increase in accuracy of the position determination of the electronic devices 100. During the such prolonged commissioning the position for a specific electronic device may be determined many times. From such statistic information a position of the specific electronic device 100 may be determined. Further, in some embodiments an uncertainty measure may be determined for the determined position for each electronic device 100. The uncertainty measure may pertain to a signal strength of the ID-message received by the portable electronic device 200. A relatively strong signal indicating a "good estimate", and vice versa.

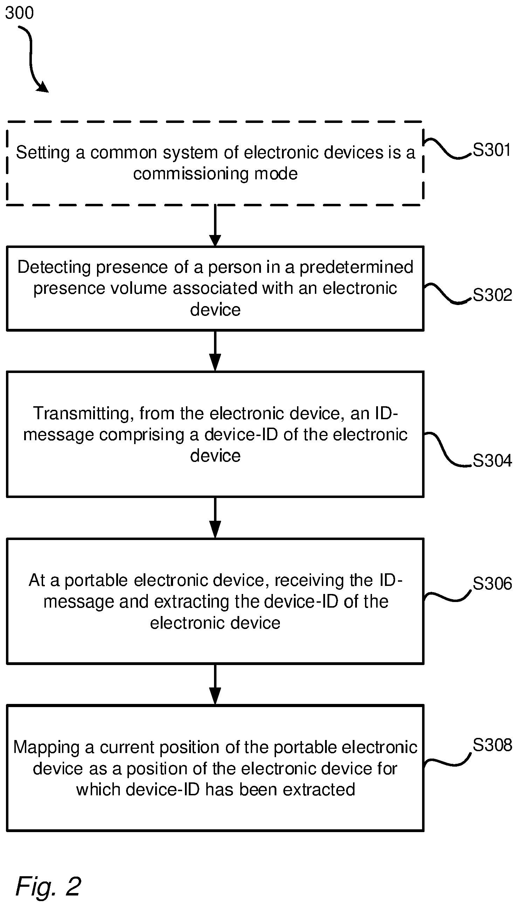

In connection with Fig. 2 a method 300 for determining position of each of a plurality of electronic devices 100 belonging to a common system of electronic devices will be discussed. The method comprising, for each of the plurality of electronic devices 100, the following steps. The steps may be performed in any suitable order.

Detecting S302 presence of a person in a predetermined presence volume associated with an electronic device 100.

In response to detecting presence of a person in the predetermined presence volume, wirelessly transmitting S304, from the electronic device 100, an ID-message comprising a device-ID of the electronic device 100.

At a portable electronic device 200, receiving S306 the ID-message and extracting the device-ID of the electronic device 100.

Mapping S308 a current position of the portable electronic device 200 as a position of the electronic device 100 for which device-ID has been extracted. The mapping may be performed at the portable electronic device 200 or at the central control engine 150. The step of mapping may comprises allocating the device-ID to an electronic device in a preexisting map of the common system of electronic devices by comparing the current position of the portable electronic device 200 with positions of the electronic devices in the preexisting map.

The method 300 may further comprise setting S301 the common system of electronic devices 100 is a commissioning mode. In the commissioning mode a respective presence sensor 110 in each of the electronic devices 100 in the common system of electronic devices is set in an active mode such that presence of a person in a predetermined presence volume related to the respective electronic device 100 is detectable.

The person skilled in the art realizes that the present invention by no means is limited to what is explicitly described above. On the contrary, many modifications and variations are possible within the scope of the appended claims.

For example, above the electronic devices 100 of the common system 10 of electronic devices are luminaries in a lighting system. However, the electronic devices 100 may in other embodiments be other kinds of electronic devices 100 of a common system of electronic devices. For example, monitoring cameras in a set of monitoring cameras or sensors in a set of sensors (such as temperature, CO₂, and humidity sensors) of a building management system. For such common systems of electronic devices, it may also be important to know at which position in the building each electronic device (monitoring camera, sensor) is positioned. The concept present above may be applied also for such electronic devices/systems.

Additionally, variations can be understood and effected by the skilled person in practicing the claimed invention, from a study of the drawings, the disclosure, and the appended claims.

## Claims

1. An electronic device configured to be fixedly mounted in a space, the electronic device comprising:
a presence sensor (110) configured to detect presence of a person in a predetermined presence volume;
an ID-transmitter (120) configured to wirelessly transmit an ID-message comprising a device-ID of the electronic device, the ID-transmitter (120) further being configured to be in a normally-off mode or in an active mode; and
control circuitry (130) configured to, in response to the presence sensor (110) detecting presence of a person in the predetermined presence volume, set the ID-transmitter (120) in the active mode such that the ID-transmitter (120) transmits the ID-message.

2. The electronic device according to claim 1, wherein the ID-transmitter (120), upon being set in the active mode, is configured to transmit the ID-message a plurality of times until it returns to the normally-off mode.

3. The electronic device according to claim 1 or 2, wherein the ID-transmitter (120) is in the normally-off mode unless the presence sensor (110) is detecting presence of a person in the predetermined presence volume.

4. The electronic device according to any one of claims 1-3, wherein the presence sensor (110) is set to have a field-of-view covering a solid angle of 0.10 to 1.0 steradian.

5. The electronic device according to any one of claims 1-4, wherein the ID-transmitter (120) is configured to transmit the ID-message via light signaling or radio communication.

6. The electronic device according to any one of claims 1-5, wherein the presence sensor (110) is configured be in a normally-off mode or in an active mode, wherein the presence sensor (110) is configured to be set in the active mode in response to a configuration commissioning message from a remote device.

7. A non-transitory computer-readable recording medium having recorded thereon a program which is executable on a portable electronic device (200) having processing capabilities, wherein the program comprises program code portions which when executed on the portable electronic device (200) is configured to:
extract a device-ID pertaining to an electronic device (100) from an ID-message wirelessly received by the portable electronic device (200); and
associate a current position of the portable electronic device (200) with the extracted the device-ID.

8. The non-transitory computer-readable recording medium according to claim 7, wherein the program further comprises program code portions which when executed on the portable electronic device (200) is configured to:
map the current position of the portable electronic device (200) as a position of the electronic device (100) for which the device-ID has been extracted.

9. A method for determining a position of each of a plurality of electronic devices (100) belonging to a common system of electronic devices, the method comprising, for each of the plurality of electronic devices (100):
detecting (S302) presence of a person in a predetermined presence volume associated with the electronic device (100);
in response to detecting presence of a person in the predetermined presence volume, wirelessly transmitting (S304), from the electronic device (100), an ID-message comprising a device-ID of the electronic device (100);
at a portable electronic device (200), receiving (S306) the ID-message and extracting the device-ID of the electronic device (100); and
mapping (S308) a current position of the portable electronic device (200) as a position of the electronic device (100) for which device-ID has been extracted.

10. The method according to claim 9, wherein the step of mapping (S308) comprises allocating the device-ID to an electronic device (100) in a preexisting map of the common system of electronic devices by comparing the current position of the portable electronic device (200) with positions of the electronic devices (100) in the preexisting map.

11. The method according to claim 9 or 10, further comprising setting (301) the common system of electronic devices is a commissioning mode wherein a respective presence sensor (110) in each of the electronic devices (100) in the common system of electronic devices is set in an active mode such that presence of a person in a predetermined presence volume related to the respective electronic device (100) is detectable.

12. A system comprising a plurality of electronic devices (100) according to any one of claims 1-6, wherein the plurality of electronic devices (100) belongs to a common system of electronic devices, wherein the common system of electronic devices is a lighting system and wherein the electronic devices (100) are luminaries of the lighting system.

13. The system according to claim 12, further comprising a portable electronic device (200) comprising a non-transitory computer-readable recording medium according to claim 7 or 8.

14. The system according to claim 13, further comprising a central control engine (150) configured to store a database (152) comprising a respective position of each of the plurality of electronic devices (100) and a device-ID associated with the respective electronic device (100).

15. The system according to claim 14, wherein the central control engine (150) is further configured to:
receive information associating a position with a device-ID; and
map the received position as a position of the electronic device (100) which the device-ID.
